# EUROPÄISCHE PATENTANMELDUNG

(11) **EP 1 048 887 A2**
(43) Veröffentlichungstag der Anmeldung: **02.11.2000**
(21) Anmeldenummer: 00108616.4
(22) Anmeldetag: 20.04.2000
(51) Int. Cl.: F16L 59/02, B32B 19/00, D04H 1/00

(54) **Verfahren und Vorrichtung zur Herstellung von Dämmstoffen aus Mineralfasern sowie Dämmstoffelement aus Mineralfasern**

(30) Priorität: 27.04.1999 DE 19919004
(71) Anmelder: Deutsche Rockwool Mineralwoll-GmbH, 45966 Gladbeck (DE)
(72) Erfinder: Klose, Gerd-Rüdiger Dr., 46286 Dorsten (DE)
(74) Vertreter: Wanischeck-Bergmann, Axel, Dipl.-Ing.

(57) **Zusammenfassung**

Die Erfindung betrifft ein Verfahren und eine Vorrichtung zur Herstellung von Dämmstoffen aus Mineralfasern sowie ein Dämmstoffelement aus Mineralfasern. Bei dem erfindungsgemäßen Verfahren werden mit Bindemittel versetzte Fasern zu einem Faservlies abgelegt, welches Faservlies ein Primärvlies mit großen Oberflächen bildet, das derart zu einem Sekundärvlies angeordnet wird, daß die großen Oberflächen des Primärvlieses im Sekundärvlies aneinanderliegend als Grenzflächen benachbarter Faserlagen angeordnet sind. Um ein Dämmstoffelement mit verbessertem Zusammenhalt mehrerer Faserlagen ohne eine wesentliche Erhöhung von Bindemitteln zu schaffen ist vorgesehen, daß die Fasern im Bereich der Grenzflächen durch eine mechanische Bearbeitung des Sekundärvlieses über große Oberflächen des Sekundärvlieses aus ihrer ursprünglichen Anordnung im Primärvlies derart umgelenkt werden, daß einzelne Fasern mit zumindest Teilbereichen in benachbarten Faserlagen angeordnet sind.

## Beschreibung

Die Erfindung betrifft ein Verfahren zur Herstellung von Dämmstoffen aus Mineralfasern, insbesondere aus Steinwollefasern, bei dem mit Bindemitteln versetzte Fasern zu einem Faservlies abgelegt werden, welches Faservlies ein Primärvlies mit großen Oberflächen bildet, das derart zu einem Sekundärvlies angeordnet wird, daß die großen Oberflächen des Primärvlieses im Sekundärvlies aneinanderliegend als Grenzflächen benachbarter Faserlagen angeordnet sind.

Die Erfindung betrifft ferner eine Vorrichtung zur Bearbeitung eines Dämmstoffvlieses aus mit Bindemitteln verbundenen Mineralfasern, insbesondere aus Steinwollefasern, mit einer Fördereinrichtung, auf der das Dämmstoffvlies mit bestimmter Transportgeschwindigkeit gefördert wird und einem Nadelbalken, der eine Vielzahl von Nadeln aufweist, der heb- und senkbar oberhalb einer großen Oberfläche des Dämmstoffvlieses angeordnet ist.

Schließlich betrifft die Erfindung ein Dämmstoffelement aus Mineralfasern, insbesondere Steinwollefasern, mit zwei einander gegenüberliegendend angeordneten und parallel verlaufenden großen Oberflächen, wobei die Mineralfasern in einzelnen Faserlagen angeordnet sind, welche Faserlagen in einem Winkel > 0° und < 90° zur großen Oberfläche angeordnet sind und die Mineralfasern in überwiegend einer Hauptfaserrichtung parallel zu den Oberflächen der Faserlagen verlaufen.

Dämmstoffe aus Mineralfasern bestehen aus glasig erstarrten Fasern, die im allgemeinen mit duroplastisch aushärtenden Phenol-Formaldehyd-Harnstoff-Harzgemischen verbunden werden, welche möglichst punktweise zwischen den einzelnen Mineralfasern angeordnet sind. Hierbei steht im Vordergrund, daß der Gehalt an organischen Bestandteilen, nämlich den als Bindemitteln bezeichneten Harzgemischen in den Dämmstoffen nach oben hin stark begrenzt ist, um einen im Sinne der DIN 4102, Teil 1, nichtbrennbaren Dämmstoff zu schaffen. Man unterscheidet Steinwolle-Dämmstoffe und Glaswolle-Dämmstoffe, wobei Steinwolle-Dämmstoffe üblicherweise < als 4,5 Masse-% Bindemittel aufweisen, wogegen der Bindemittelanteil bei Glaswolle-Dämmstoffen bei ca. 6 bis 8 Masse-% liegt.

Zur Bindung von Faserstaub und zur Hydrophobierung der Fasern werden allen im Bauwesen verwendeten Dämmstoffen aus Mineralfasern hochsiedende Öle, wie beispielsweise Mineralöle, Silikonöle oder dergleichen in Mengen von <0,4 Masse-% zugesetzt. Diese Öle kriechen auf den Oberflächen der Fasern und verteilen sich somit völlig gleichmäßig. Diese Ölfilme sind allerdings nur wenige Nanometer dick.

Bei mittleren Faserdurchmessern von ca. 3 bis 4 µm und Faserlängen von wenigen Millimeter bis einigen Zentimetern ist es einleuchtend, daß nur bei einer sehr guten Dispersion des Bindemittels in der Fasermasse eine technisch ausreichende Bindung zwischen den Mineralfasern erreicht werden kann. Die Bindemittel werden deshalb auch in wäßriger Lösung bzw. kolloidaler Dispersion in statu nascendi der Fasern oder möglichst kurz hinter der Faserbildungszone in die Fasermasse der noch nicht abgelegten Fasern eingesprüht. Das hierbei schlagartig verdampfende Wasser der Bindemittel verbessert den Dispersionsgrad des Bindemittels. Dennoch ist es unter den normalen Betriebsbedingungen technisch nicht möglich, alle Fasern gleichmäßig zu binden. Vielmehr bilden sich immer wieder Bereiche mit unterschiedlichen Bindemittelgehalten. Durch Rückströmungen in den Sammelkammern verweilen die Mineralfasern zu lange in Bereichen erhöhter Temperaturen, so daß das Bindemittel bereits hier reagiert und seine Bindefähigkeit wesentlich verringert ist. Die Verringerung der Bindefähigkeit des Bindemittels kann bis zur vollständigen Aufhebung der Bindefähigkeit gehen.

Steinwollefasern werden in der Regel entweder nach dem Düsen-Blas-Verfahren oder nach dem Kaskaden-Verfahren (Mehrrad-Zerfaserer) hergestellt. In beiden Fällen beträgt die Ausbeute an Mineralfasern nur etwa 50 Masse-% des eingesetzten Ausgangsmaterials. Die auf die nichtfaserigen Partikel auftreffenden Bindemittelmengen sind daher für das Bindeverhalten der Mineralfasern verloren, da sie aufgrund der vorhandenen Wärmeenergie verbrennen bzw. sofort aushärten und deshalb in den nachfolgenden Verformungsprozessen keinen positiven Beitrag mehr leisten können.

Neben organischen Bindemitteln besteht die Bestrebung, auch anorganische Bindemittel zur Herstellung von Dämmstoffen einzusetzen. Viele der anorganischen Bindemittel eignen sich aber nicht für die Verwendung in den üblichen Herstellungsprozessen, da sie bereits in den Sammelkammern ausreagieren und somit eine nachfolgende Bearbeitung der abgelegten und agglomerierten Fasern nicht mehr möglich ist. Lediglich die Verwendung von anorganischen Kieselsäure-Verbindungen, die in Form von Nanometer kleinen Partikeln in wäßrigen-alkoholischen Lösungen dispergiert sind, hat zu einer erfolgversprechenden Verarbeitung bei der Herstellung von Dämmstoffen geführt. Großtechnischer Einsatz scheiterte aber bisher an dem Preis dieses Bindemittels, sowie den von Alkoholen oder anderen organischen Lösungsmitteln ausgehenden Brand- bzw. Explosionsrisiken.

Bei der Herstellung der Dämmstoffe werden die mit Binde- und Hydrophobierungsmitteln benetzten, insbesondere imprägnierten Fasern in der sogenannten Sammelkammer mit Hilfe eines Luftstromes auf einem Transportband abgelegt. Die Faserablagerung auf dem in der Regel luftdurchlässigen Transportband erfolgt entweder im senkrechten Fall oder im Wurf. Beim Wurf-Verfahren ist der Zerfaserer in Richtung der Hauptachse der Produktionslinie angeordnet. Die Mineralfasern werden zunächst in horizontaler Richtung von dem Zerfaserer weggesaugt und dann nach unten abgelenkt, so daß sich die Mineralfasern mehr oder weniger frei, d. h. unter der Wirkung des Ansaugdrucks auf dem Transportband ablagern. Im Extremfall sind lange glatte Mineralfasern horizontal geschichtet und bilden eine laminare Struktur. Da sich die Mineralfasern aber sehr schnell im Luftstrom aggregieren, ist die Ablagerungsstruktur durch eine Sekundärstruktur in diesen aggregierten Mineralfasern überlagert. Diese Unterschiede werden noch durch ungleiche Bindemittel-Verteilung verstärkt. In Abhängigkeit der Materialstärke eines abgelegten Faserbettes wird die Geschwindigkeit des Transportbandes eingestellt, so daß sich ein mehrere Zentimeter bis mehrere Dezimeter dickes Faserbett bildet.

Um zu verhindern, daß die Restwärme in dieser abgelegten Mineralfasermasse das Bindemittel aktiviert, muß eine bestimmte Restfeuchte in der Mineralfasermasse vorhanden sein. Diese Restfeuchte wird bei den üblichen Verfahren auf ein unbedingt notwendiges Minimum begrenzt und häufig aus Gründen von Energieeinsparungen beim Aushärten des Bindemittels im Härteofen und bei der Verbrennung der Rauchgase des Härteofens unterschritten.

Im Vergleich zu der voranstehend beschriebenen Herstellung von Dämmstoffen aus Steinwollefasern können bei der Herstellung von Glaswollefasern mehrere Zerfaserer in Reihe einer Herstellungslinie angeordnet sein. Die Rohdichte der Glaswolle-Dämmstoffe beträgt üblicherweise weniger als 70 kg/m³. Darüberhinaus werden Glasfasern nicht kontinuierlich aufeinander geschichtet, so daß die Gefahr einer vorzeitigen Erhärtung des Bindemittels gering ist. Durch die Reihenschaltung der Zerfaserer können zudem Ungleichmäßigkeiten in der Rohdichteverteilung weitgehend kompensiert werden.

Bei der Herstellung von Dämmstoffe aus Steinwollefasern, insbesondere auf Herstellungslinien mit hoher Leistung wird in der Sammelkammer nur ein möglichst dünnes Primärvlies erzeugt und sofort abtransportiert. Hierbei weisen die Mineralfasern des Kaskaden-Verfahrens eine durch die hohen Turbulenzen in der Sammelkammer verursachte gekrümmte Form auf. Diese Mineralfasern sind wesentlich kürzer, als die im Schleuder-Blas-Verfahren hergestellten Mineralfasern aus Glaswolle. Hierdurch bilden sich regelmäßig Mineralfaseraggregationen, sogenannte Flocken, die als solche auf dem Förderband abgelegt werden. Hieraus folgt, daß das Primärvlies eines Steinwolle-Dämmstoffes von vornherein nur einen geringen inneren Zusammenhalt aufweist. Die Mineralfasern, die bei ihrer Bildung nicht mit Bindemitteln in Berührung gekommen sind oder deren Bindemittel-Anteil verbrannt ist, haften naturgemäß kaum aneinander und legen sich deshalb in der Sammelkammer in Form dünner Schichten bzw. flächiger Aggregate auf der Oberfläche des Primärvlieses ab. In der Sammelkammer erfolgt quasi eine Windsichtung von Mineralfasern und leichten Mineralfaserflocken einerseits und verhältnismäßig kleinen nicht faserigen Bestandteilen (Glasperlen) andererseits. Anhaftungen von Mineralfasern mit erhöhtem Gehalt an feuchtem Bindemittel, aber auch Mineralfasern, in denen sich nicht faserige Bestandteile verfangen haben, können nach dem Abfallen von den Sammelkammerwänden im Bereich des Sammelkammerbandes in das Primärvlies gelangen. Während die nassen Mineralfaserflocken später im Härteofen in Folge der angestrebten kurzen Verweilzeit nicht aushärten, bilden die bindemittelfreien Mineralfasern und Mineralfaserflocken innere Trennschichten. Darüberhinaus kann die innere Bindung des Dämmstoffes durch weitere schwächende Elemente, beispielsweise Mineralfaserflocken aus Recycling-Dämmstoffen wesentlich geschwächt werden, wenn diese Mineralfaserflocken durch eine unsachgemäße Zerkleinerung zu groß sind und / oder eine relativ hohe Rohdichte aufweisen. Da derartige Mineralfaserflocken aufgrund des inneren Filterwiderstandes der Mineralfaserflocken nur äußerlich schwach, vielfach aber auch gar nicht gebunden werden, werden sie bei der Verdichtung der imprägnierten Mineralfasermassen vor dem Härteofen nur komprimiert, ohne aber ihren inneren Zusammenhalt zu verlieren. Sie haben deshalb immer die Tendenz, sich auszudehnen und tragen zu Relaxationseffekten bei, die sich später als zeitabhängige Abminderung der mechanischen Eigenschaften auswirken.

Ein derart hergestelltes Primärvlies wird anschließend mit Hilfe einer Pendeleinrichtung auf einem Transportband abgelegt. Die Richtung der Pendelbewegung der Pendeleinrichtung ist bevorzugt quer zur Transportrichtung des Transportbandes. Je nach Rohdichte und Dicke des Dämmstoffes, der letzten Endes hergestellt werden soll, werden auf diese Weise die Primärvlieslagen in einer Größenordnung von beispielsweise 80 cm hoch übereinander gelegt. Um eine möglichst homogene Struktur der Dämmstoffe zu erreichen, wird eine hohe Zahl von Primärvlieslagen pro Volumeneinheit angestrebt. In der Praxis variiert die Zahl der übereinanderliegenden Primärvlieslagen zwischen 4 und 16.

Aus dem Stand der Technik ist es auch bekannt, das Primärvlies in Transportrichtung, d. h. durch Auf- und Abbewegung der Pendeleinrichtung auf dem Transportband abzulegen. Die Primärvlieslagen werden bei dieser Vorgehensweise in einer nahezu senkrechten Lage auf dem Transportband angeordnet. Durch eine leichte Längs- und Höhenkompression werden die einzelnen Primärvlieslagen aneinandergepreßt.

Eine für das Pendeln eines Primärvlieses einsetzbare Pendelvorrichtung besteht aus zwei parallel angeordneten kurzen Transportbändern, zwischen denen das Primärvlies transportiert und gelenkt wird. Das Primärvlies wird sowohl bei der Umlenkung nach unten in die Pendelvorrichtung hinein als auch durch die abrupten Richtungsänderungen beim Verlassen der Pendeleinrichtung mehr oder weniger fest gegen die Transportbänder, insbesondere gegen die Umlenkrollen gedrückt. Ähnliche Effekte treten bereits an Umlenkrollen auf, die das Primärvlies nach dem Verlassen der Sammelkammer bzw. bei der Umlenkung des Primärvlieses in die Pendelvorrichtung passiert. Durch die mehrfache Umlenkung des Faservlieses wird der größte Teil der Mineralfasern des Primärvlieses parallel zu den großen Oberflächen ausgerichtet. Gleichzeitig sinkt die Klebfähigkeit des Bindemittels durch Anhaftungen an den Fördermitteln. Um diesen Effekt zu vermeiden, werden die Fördermittel ggf. mit Trennmitteln behandelt, die nun wiederum selbst auf dem Bindemittel wirksam werden.

Das Primärvlies legt von der Sammelkammer bis zum Ausgang der Pendelvorrichtung einen relativ langen Transportweg zurück. Durch diesen Transportweg und insbesondere auch durch die hohe Frequenz der Pendelbewegungen der Pendelvorrichtung neigt das relativ dünne Primärvlies zum Austrocknen. Hierdurch verlieren kleinere Bindemitteltropfen schneller die notwendige Feuchte als größere Bindemitteltropfen. Zwar entzieht die Verdampfungswärme dem Tropfen Energie, aber bei der nachfolgenden Verformung fehlt diese Feuchte, um das Bindemittel aktiv zu halten. Die hiermit einhergehende Reduzierung der Klebfähigkeit des Bindemittels verhindert nachfolgend die Verbindung der Primärvlieslagen untereinander bzw. verstärkt durch Faseragglomerationen oder unterschiedliche Bindemittelverteilungen, die bereits vorhandenen Inhomogenitäten.

Die aufgependelten Primärvlieslagen bilden ein Sekundärvlies, welches in verschiedenen thermischen und mechanischen Bearbeitungsstufen bearbeitet wird. Derartige Sekundärvliese werden vorzugsweise zu leichten, insbesondere rollbaren Dämmstoffen verarbeitet, wozu die aufgependelten Primärvlieslagen zuvor mehr oder weniger stark vertikal komprimiert und in horizontaler Richtung in der Regel um maximal 5 bis 15 % verdichtet einem Härteofen zugeleitet werden. Im Härteofen wird das Bindemittel mit Hilfe von Heißluft in relativ kurzer Zeit ausgehärtet. Im Anschluß an den Härteofen läuft das Sekundärvlies in eine Wickelvorrichtung ein, in der ein bestimmter Abschnitt des Sekundärvlieses aufgewickelt, abgeschnitten und in Folie eingepackt wird. Der Aufrollvorgang führt zu einem regelmäßigen Aufreißen des Sekundärvlieses entlang der ursprünglichen Primärvlieslagen, da in diesen Bereichen die Verbindung zwischen den ursprünglichen Primärvlieslagen relativ gering ist. Die hierdurch bedingten Risse entsprechen naturgemäß bevorzugt den Bereichen, die der höchsten Zugbeanspruchung unterworfen sind. Bei einer spiraligen Aufwicklung finden sich diese Bereiche dort, wo die Krümmungsradien am kleinsten sind. Bei üblichen Wickelmaschinen, die eine abrupte Umlenkung verbunden mit einer hohen Zugbeanspruchung des bahnenförmigen Sekundärvlieses bewirken, kommt es bereits mit dem Einlauf des Primärvlieses in die Wickelmaschine zu einer starken Überlastung des Dämmstoffes in der Zugebene. Das Aufreißen des Dämmstoffes wird beispielsweise dadurch verhindert, daß der bahnförmige Dämmstoff mit zugfesten Kaschierungen versehen wird.

Bei der Herstellung von Dämmstoffen aus Mineralfasern mit hohen Ansprüchen an die Widerstandsfähigkeit gegen Druck, Querzug und Schub allein oder in Kombination wird das Sekundärvlies vor dem Einlaufen in den Härteofen in Längsachsenrichtung um ca. das 2- bis 3-fache und in Richtung der Flächennormalen der großen Oberflächen um das ca. 1,5-bis 3-fache auf Rohdichten von ca. 70 bis 230 kg/m³ komprimiert. Hierbei besteht das Ziel, eine intensive Verfaltung der Primärvlieslagen zu erreichen. Diese intensive Verfaltung der Primärvlieslagen in Transportrichtung erfolgt insbesondere auf den Trennflächen zwischen den Primärvlieslagen oder im Bereich von Schwächezonen, in denen bindemittelfreie Fasern, nicht faserige Bestandteile oder Recyclingflocken in großem Umfang angereichert sind. Aufgrund der intensiven Reibung während der Kompression werden die einzelnen Mineralfasern zunächst noch stärker parallel zu den Bewegungsflächen angeordnet. Die entstehende Reibungswärme läßt das Bindemittel bereits vor Erreichen der endgültigen Struktur reagieren, wodurch die mechanischen Eigenschaften des Dämmstoffes nachteilig beeinflußt werden.

Aufgrund der fehlenden Kompression quer zur Transportrichtung weist das Sekundärvlies eine starke Anisotropie auf. Werden derartige Dämmstoffe beispielsweise in einer Flachdach-Konstruktion durch eingeschlossene Feuchte und Begehen hydromechanisch beansprucht, so neigt der Dämmstoff insbesondere im Bereich auf den Scherflächen zur Auflösung.

Ausgehend von diesem Stand der Technik liegt der Erfindung die **Aufgabe** zugrunde, ein Verfahren zu schaffen, mit dem ein Dämmstoffelement mit verbessertem Zusammenhalt mehrerer Faserlagen ohne eine wesentliche Erhöhung von Bindemitteln herstellbar ist, so daß ein solches Dämmstoffelement ohne Beeinträchtigung seiner Eigenschaften beispielsweise wickelbar und in vielfältiger Weise anwendbar ist. Gleichzeitig liegt der Erfindung die Aufgabe zugrunde, eine gattungsgemäße Vorrichtung zu schaffen, mit der ein derartiges, ebenfalls erfindungsgemäßes Dämmstoffelement herstellbar ist.

Die **Lösung** dieser Aufgabenstellung sieht bei einem erfindungsgemäßen Verfahren vor, daß die Fasern im Bereich der Grenzflächen durch eine mechanische Bearbeitung des Sekundärvlieses über große Oberflächen des Sekundärvlieses aus ihrer ursprünglichen Anordnung im Primärvlies derart umgelenkt werden, daß einzelne Fasern mit zumindest Teilbereichen in benachbarten Faserlagen angeordnet sind.

Erfindungsgemäß ist demzufolge vorgesehen, daß eine gezielte Umlenkung der einzelnen Mineralfasern, insbesondere im Bereich der Grenzflächen der Primärvlieslagen erfolgt. Hierdurch werden nicht nur die einzelnen Lagen aneinandergeheftet, sondern auch dafür Sorge getragen, daß die umgelenkten Mineralfasern die Relativbewegungen der Mineralfasern während der Längs- und Höhenkompression des Sekundärvlieses blokkieren. Die Verfaltung der Mineralfasern wird hierdurch intensiviert und die Ausdehnung der möglicherweise schädlichen glatten Bewegungsebenen zumindest deutlich verringert.

Die Umlenkung der Mineralfasern erfolgt vorzugsweise vor und / oder während einer Kompression des Sekundärvlieses in Längs- und / oder Deckenrichtung des Sekundärvlieses. Es handelt sich somit um eine Längs- und Höhenkompression, wobei die Umlenkung der Mineralfasern in einem oder mehreren, in ihrer Wirkung gleichen oder in abgestuften Schritten erfolgen kann. Durch diese Vorgehensweise wird eine intensivere Verbindung zwischen den Primärvlieslagen erzielt, so daß der Dämmstoff mit deutlich verbesserten mechanischen Eigenschaften hergestellt wird. Ein nach dem erfindungsgemäßen Verfahren hergestellter Dämmstoff ist daher dazu geeignet, in geeigneten Aufrollvorrichtungen ohne Bildung übermäßiger Risse in den Zugzonen aufgerollt zu werden.

Vorzugsweise werden die umzulenkenden Mineralfasern in einem Winkel von 45° bis 135° zur Grenzfläche umgelenkt. Hierbei hat sich eine Ausrichtung der umgelenkten Mineralfasern rechtwinklig zur Grenzfläche als besonders vorteilhaft erwiesen.

Die angestrebte Struktur des Dämmstoffes kann beispielsweise mit Hilfe einer Vernadelung erreicht werden. Derartige Vernadelungstechniken sind bei bindemittelfreien Dämmstoffen bekannt, um die Verbindung der Mineralfasern bei fehlendem Bindemittel zu verbessern. Diese Vernadelung ist aber auf vergleichsweise dünne Faservliese beschränkt. Beispielsweise wird eine solche Vernadelung bei Faservliesen mit Materialstärken von weniger als 40 mm und Rohdichten von ca. 85 bis ca. 170 kg/m³ angewendet. Die Produktivität derartiger Herstellungsprozesse ist sehr gering, so daß es sich hierbei um Spezialprodukte für einen sehr begrenzten Markt handelt. Entsprechende Faservliese haben den Charakter von Matten und sind wegen völlig unzureichender mechanischer Eigenschaften nur beschränkt einsetzbar. Auch ihre Aufrollbarkeit ist sehr begrenzt.

Das erfindungsgemäße Verfahren wird vorzugsweise in Kombination mit einer Vorbehandlung der Primärvlieslagen durchgeführt. Hierzu werden die Primärvlieslagen ausgangsseitig einer Pendelvorrichtung mit einer Bindemittel-Lösung besprüht, wobei es sich beispielsweise um das Bindemittel handeln kann, das bereits zur Bindung der Fasern in der Sammelkammer zugesetzt wird.

Gemäß einem weiteren Merkmal der Erfindung werden in den äußeren Bereichen des Primärvlieses, insbesondere in den Zonen, die bei einem rollbaren Sekundärvlies auf Zug beansprucht werden, Gemische aus duroplastischen Bindemitteln und Dispersionen thermoplastischer Kunststoffe, wie Polyvinylacetat, Acrylate, Polystyrol, Styrol-Butadien usw. sowohl allein als auch mit Copolymerisaten oder in Gemischen aufgesprüht werden. Hierdurch werden filmartige Beschichtungen aus Thermoplasten gebildet, die extrem dehnbar sind und bereits hierdurch den Zusammenhalt der Primärvliese wesentlich verbessern. Aufgrund der Hydrophilität einiger der thermoplastischen Kunststoffe bzw. ihrer filmartigen Beschichtungen können diese jedoch nicht zur Verstärkung solcher Dämmstoffe eingesetzt werden, die im Gebrauch hoher Feuchtigkeit ausgesetzt sind.

Vorzugsweise werden diese organischen Bindemittel bzw. Bindemittellösungen in einem Umfang von <600 g Trockensubstanz/m² doppelter Primärvlies-Grenzfläche aufgesprüht.

Um die Eigenschaften eines nicht brennbaren Dämmstoffes beibehalten zu können, werden anorganische Bindemittel, wie Wassergläser, Kieselsol oder über Sol-Gel-Reaktionen aushärtende organische Kieselsäureverbindungen auf die Primärvlieslagen gesprüht. Die Behandlung kann in Kombination mit der Anwendung der voranstehend genannten organischen Bindemittel erfolgen. Den anorganischen Bindemitteln können darüberhinaus zusätzlich flammschützende Oxide und / oder Hydrate in entsprechend hoher Dispersion zugefügt werden.

Vorzugsweise erfolgt das Aufsprühen der Bindemittellösung auf einer großen Oberfläche des Primärvlieses gleichzeitig mit einer Unterdruckerzeugung im gleichen Flächenbereich der gegenüberliegenden großen Oberfläche. Hierdurch werden zu große Luftmengen für das Versprühen des Bindemittels vermieden, die die Anordnung der bereits abgelegten Mineralfasern des Primärvlieses negativ beeinflussen. Durch einen unter der Ablagestelle des Primärvlieses angeordneten Absaugventilator wird der in der Regel geringe Unterdruck erzeugt, so daß das Bindemittel in möglichst vollständigem Umfang auf bzw. in das Primärvlies gelangen kann.

Nach einem weiteren Merkmal der Erfindung ist vorgesehen, daß zur besseren Benetzung der bereits hydrophobierten Fasern den wäßrigen Bindemittel-Lösungen organische Lösungsmittel, insbesondere Alkohole in geringen Mengen zugesetzt werden, wobei darauf zu achten ist, daß die erforderlichen Zusätze so gering sind, daß keine Brand- oder gar Explosionsgefahr bei der nachfolgenden Aushärtung des Bindemittels im Härteofen besteht. Eine weitere Möglichkeit eine bessere Benetzung der Fasern zu erreichen, wird durch den Zusatz von Tensiden erzielt.

Vorzugsweise erfolgt die Umlenkung der Mineralfasern im Sekundärvlies ungefähr in einer Tiefe von zumindest 1 bis 2 cm bis zur halben Materialstärke des Sekundärvlieses. Hierbei hat es sich als vorteilhaft erwiesen, bei der Vernadelung eine Nadeldichte von 2 bis 5 Stück/cm², insbesondere 4 Stück/cm² vorzusehen.

Bei einem in einem abschließenden Verfahrensschritt aufzuwickelnden Sekundärvlies ist es ausreichend, die Umlenkung der Mineralfasern im Bereich einer großen Oberfläche durchzuführen. Es besteht aber grundsätzlich auch die Möglichkeit, die Umlenkung der Mineralfasern von beiden großen Oberflächen des Sekundärvlieses aus durchzuführen, so - daß insgesamt eine verbesserte Verbindung zwischen den Primärvlieslagen erzielt wird.

Während der Vernadelung werden vorzugsweise über eindringende Nadeln Bindemittel in das Sekundärvlies eingebracht. Diese Ausgestaltung des erfindungsgemäßen Verfahrens weist den Vorteil auf, daß die Verbindung zwischen den umgelenkten Mineralfasern im Bereich der Primärvlieslagen nicht nur durch die eine Verbindung zwischen benachbarten Primärvlieslagen angeordneten umgelenkten Mineralfasern, sondern auch durch gezielt eingebrachtes zusätzliches Bindemittel vorgesehen ist.

Als Bindemittel sind wäßrige Harzlösungen, kolloidale Lösungen, Dispersionen thermoplastischer Bindemittel, in organischen Lösungsmitteln gelöste Harze, sowie anorganische Bindemittel, wie Kieselsol, Wasserglas, organische Kieselsäureverbindungen, die in Sol-Gel-Prozessen aushärten allein oder in Gemischen vorgesehen.

Um die mechanischen Eigenschaften des Dämmstoffes weiter zu verbessern, kann es nach einem weiteren Merkmal vorgesehen sein, daß den Bindemittelfasern aus Polyolefinen und / oder Polyamiden und / oder anorganischen Füllstoffen, insbesondere in den Nanometer-Bereich dispergierte H-Bentonite in Verbindung mit Phenol-Harnstoff-Formaldehydharz-Gemischen zugesetzt werden, welche Bestandteile insbesondere über beheizbare Düsen, vorzugsweise in den Nadeln in das Sekundärvlies eingebracht werden. Durch die beheizbaren Düsen wird vermieden, daß die thermoplastischen Elemente, wie Schmelzkleber, aber auch Fasern aus Polyolefinen, Polyamiden oder dergleichen vor Erreichen des Sekundärvlieses aushärten und die zum Einbringen verwendeten Düsen bzw. Nadeln verkleben.

Um den herzustellenden Dämmstoff auf spezielle Anwendungsbereiche einzustellen, kann es vorgesehen sein, in die gegenüberliegend angeordneten großen Oberflächen des Sekundärvlieses Bindemittel unterschiedlicher Zusammensetzung und Wirkung einzubringen. So können beispielsweise auf der bei der Verpackung oder im Gebrauch auf Zug beanspruchten Zone des Dämmstoffes beispielsweise dehnfähige thermoplastische Verstärkungsmittel, unter Umständen auch in größerer Menge eingebracht werden, während auf der gegenüberliegenden, nur wenige, kompressiblere oder auch tragfähigere Verstärkungsmittel injiziert werden. Die Verstärkungsmittel können über die gesamte Einstechtiefe der Nadel verteilt oder punktweise injiziert werden. Es besteht die Möglichkeit, daß die Verstärkungsmittel über den gesamten Eindringweg der Nadel in das Sekundärvlies, vorzugsweise beim Herausziehen der Nadel eingebracht wird oder daß die Verstärkungsmittel nur zum Zeitpunkt der Stellung der Nadel in ihrer maximalen Eindringtiefe impulsartig injiziert werden.

Voranstehend beschriebene Verstärkungsmittel und Bindemittel können bei Dämmstoffen aus Mineralfasern mit einer laminaren Struktur verwendet werden, um eine unerwünschte Materialstärkenzunahme zu begrenzen, während die Kompression z. B. hinsichtlich einer möglichst hohen Lagerungsdichte unbeeinflußt bleibt. Die in die Tiefe des Sekundärvlieses eingebrachten Verstärkungsmittel können gemäß voranstehenden Ausführungen bis in den Oberflächenbereich des Sekundärvlieses geführt werden. Klebemörtel oder Putzschichten, die bei der Verarbeitung der Dämmstoffe auf die großen Oberflächen aufgetragen werden, erhalten hierdurch eine stärkere Bindung zum Dämmstoff, wodurch sich eine höhere Haftungssicherheit über die Gebrauchsdauer beispielsweise von Wärmedämm-Verbundsystemen oder von Sandwich-Wand- und Deckenelementen ergibt.

Nach einem weiteren Merkmal der Erfindung ist vorgesehen, daß die Kompression des Sekundärvlieses in Längs- und Dickenrichtung des Sekundärvlieses in einzelnen, insbesondere gegeneinander abgegrenzten Schritten erfolgt und daß das Einbringen des Bindemittels in das Sekundärvlies zwischen den Kompressionsschritten erfolgt. Demzufolge erfolgt die Umlenkung der Mineralfasern im Bereich der benachbarten Faserlagen des Primärvlies sowie auch das Einbringen zusätzlicher Bindemittel und Verstärkungsmittel alternierend mit Kompressionsschritten, so daß beispielsweise auf das Einbringen eines Binde- bzw. Verstärkungsmittels in das Sekundärvlies eine Kompression erfolgt und die positive Wirkung erzielt wird, daß die Wirkung des unmittelbar nach seinem Einbringen noch hoch wirksamen Binde- bzw. Verstärkungsmittels annähernd vollständig ausgenutzt werden kann. Hieraus folgt, daß die Längs- und Höhenkompression der imprägnierten Mineralfasern im Sekundärvlies in Schritten unterschiedlicher Tiefe oder Intensität durchgeführt werden kann und daß nach jedem Verformungsschritt die Umlenkung der Mineralfasern in Verbindung mit den inneren Verstärkungen möglich ist. Die Behandlung des Sekundärvlieses wird dann beendet, wenn die weitere Verformung so gering ist, daß die mechanischen Eingriffe an dem fertigen Dämmstoff sichtbar bleiben oder zu einem Qualitätsmangel des Dämmstoffes führen.

Um eine gleichmäßige Anfeuchtung der Mineralfasern zu erzielen, besteht die Möglichkeit, das Sekundärvlies mit Sattdampf zu behandeln. Hierbei ist eine gleichmäßige Anfeuchtung der Mineralfasern vor der Kompression vorteilhaft um das Zerbrechen der Mineralfasern während der Kompression aufgrund ihrer Sprödizität auszuschließen. Im Hinblick auf die Qualitätskontrolle hat es sich als vorteilhaft erwiesen, über die als Hohlstifte ausgebildeten Nadeln Temperatur und Feuchtegehalt im Sekundärvlies zu erfassen. Mit den dadurch gewonnenen Werten kann eine individuelle Behandlung des Sekundärvlieses berechnet und gesteuert werden, um eine gleichbleibende Qualität verkaufsfertiger Dämmstoffe zu erzielen.

Beim erfindungsgemäßen Verfahren ist schließlich vorgesehen, daß zumindest eine große Oberfläche des Primärvlieses durch Stachelwalzen aufgerauht wird, ohne daß ein Aufreißen der Oberflächen erfolgt. Die Stachelwalzen weisen Stacheln auf, die vorzugsweise aus kegelstumpfförmigen Körpern bestehen, auf deren Flanken Widerhaken aufgesetzt sind. Die Walzen sind einzeln oder zu mehreren an einem Tragarm angeordnet, der entweder in Längsrichtung oder quer zur Transportrichtung des Primärvlieses verschwenkbar ist. Bei einer Längsbewegung im Bereich der Pendelvorrichtung ist es sinnvoll, das Überwalzen des gerade abgelegten Primärvlieses durch zwei getrennt arbeitende Walzenvorrichtungen vorzunehmen, die jeweils von beiden Seiten eingreifen. Um sicherzustellen, daß das über dem Haupttransportband befindliche Primärvlies nicht auf den ablaufenden Walzen hängenbleibt, werden die beiden Einrichtungen mit jeweils einem Blech abgedeckt. Die Bleche sind gegeneinander geneigt, um das Ablegen des Primärvlieses nicht zu beeinträchtigen.

Bei einer Querbewegung der Stachelwalzen wird der Tragarm mit der Geschwindigkeit des Transportbandes für das Primärvlies bewegt. In beiden Fällen wird die Umfangsgeschwindigkeit der Stachelwalzen auf diejenige der Pendelbewegung der Pendelvorrichtung abgestimmt, um ein Aufreißen der Oberfläche des Primärvlieses zu vermeiden. Die Wirkung der Stachelwalzen ist auf die Oberflächenzonen des Primärvlieses beschränkt. Ein Anhaften der mit Bindemitteln imprägnierten Mineralfasern an den Stacheln der Stachelwalzen wird dadurch vermieden, daß Druckluft oder beispielsweise Dampf über am Umfang der Walzen verteilte Auslaßdüsen über die Stacheln geleitet werden.

Es besteht ferner die Möglichkeit, über die Stacheln Wasser, Dampf und / oder Druckluft impulsartig auszustoßen und in das Primärvlies einzubringen.

Hierbei kann beispielsweise eine Umlenkung der Mineralfasern mit einem Hochdruckwasserstrahl erfolgen. Der Hochdruckwasserstrahl wird hierzu mit Hochdruck von beispielsweise 40 bis 160 bar und einem Durchmesser < 2 bis 3 mm impulsartig auf das Primärvlies aufgegeben. Die Energie des Impulses muß hierbei begrenzt werden, um eine Zerstörung der Mineralfasern zu vermeiden. Anstelle von Wasser kann ein Umlenken der Mineralfasern in dem Primärvlies auch mittels Sattdampf oder Druckluft erfolgen, der bzw. die impulsartig in das Primärvlies geblasen werden. In beiden Fällen sind die impulsgebenden Massen kleinzuhalten, da neben der Vorwärtskomponente des Impulses eine hier unerwünschte seitliche Expansion erfolgen kann. Die Tiefenwirkung dieser Umlenkung kann dadurch erhöht werden, daß die Auslaßdüsen bzw. die Stacheln in die Fasermasse gedrückt werden.

Die erfindungsgemäße Lösung bei einer gattungsgemäßen Vorrichtung zur Bearbeitung eines Dämmstoffvlieses sieht vor, daß die Nadeln beim Eindringen in das Dämmstoffvlies unter einem Winkel zwischen 45° und 135° relativ zu Grenzflächen benachbart angeordneter Faserlagen eines aufgependelten Sekundärvlieses ausgerichtet sind. Als besonders vorteilhaft hat sich hierbei ein Eindringen der Nadeln unter einem rechten Winkel zu den Grenzflächen benachbart angeordneter Faserlagen erwiesen. Demzufolge dringen die Nadeln parallel zur Flächennormalen der Oberfläche des Primärvlieses in das aufgependelte Sekundärvlies ein.

Der die Nadeln aufweisende Nadelbalken ist derart angetrieben, daß die in das Dämmstoffvlies eingedrungenen Nadeln mit Transportgeschwindigkeit des Dämmstoffvlieses bewegbar sind. Hierdurch wird vermieden, daß die eindringenden Nadeln mit ihren Widerhaken die Oberfläche des Dämmstoffvlieses aufreißen.

Um das voranstehend beschriebene Eindringen von Binde- und Verstärkungsmitteln zu ermöglichen, sind die Nadeln hohl mit zumindest einer unteren Auslaßöffnung ausgebildet. Selbstverständlich besteht auch die Möglichkeit solche Nadeln zu verwenden, die mehr als eine Auslaßöffnung haben, wobei die Auslaßöffnungen beispielsweise über den überwiegenden Teil der Mantelfläche einer jeden Nadel verteilt angeordnet sein können.

Um die erfindungsgemäße Vorrichtung in vielfältiger Weise zur Herstellung unterschiedlicher Dämmstoffvliese verwenden zu können, ohne daß aufwendige Umbauarbeiten notwendig sind, ist vorgesehen, daß die Nadeln hinsichtlich ihrer Anordnung und / oder Ausgestaltung austauschbar im Nadelbalken angeordnet sind.

Um eine angestrebte vollständige Umlenkung von Mineralfasern im Bereich der benachbarten Mineralfaserlagen des Primärvlieses zu erzielen, ist vorgesehen, daß jede Nadel im Bereich ihrer Außenmantelfläche eine Vielzahl von Widerhaken aufweist. In gleicher Weise können die Nadeln an ihren freien Enden verbreitert ausgebildet sein, so daß eine hier angeordnete Materialverdickung ebenfalls zu einem Mitreißen und somit Umlenken der Mineralfasern im Bereich der Grenzflächen benachbarter Mineralfaserlagen des Primärvlieses führt.

Die Nadeln sind hinsichtlich ihrer Winkelstellung zum Nadelbalken einstellbar, um die Vorrichtung an die Anordnung der Primärvlieslagen im Sekundärvlies anpassen zu können.

Bei einem erfindungsgemäßen Dämmstoffelement aus Mineralfasern ist zur Lösung der Aufgabe vorgesehen, daß die Mineralfasern im Bereich von Grenzflächen zwischen benachbarten Faserlagen einen von der Hauptfaserrichtung abweichenden Verlauf, insbesondere rechtwinklig zur Hauptfaserrichtung ausgerichteten Verlauf aufweisen.

Vorzugsweise ist der von der Hauptfaserrichtung abweichende Verlauf der Mineralfasern im Bereich der Grenzflächen auf einen bestimmten Tiefenbereich, ausgehend von einer großen Oberfläche beschränkt und beträgt maximal die Hälfte der Materialstärke.

Schließlich ist vorgesehen, daß das Dämmstoffelement aus einem mäandrierend abgelegten Primärvlies gebildet ist, welches als Sekundärvlies komprimiert ist, wobei benachbarte Faserlagen aus den Mäandern des Primärvlieses gebildet sind.

Weitere Merkmale und Vorteile der Erfindung ergeben sich aus der nachfolgenden Beschreibung der zugehörigen Zeichnung, die die prinzipielle Anordnung einer Vorrichtung zur Durchführung des Verfahrens zur Herstellung von Dämmstoffen aus Mineralfasern zeigt.

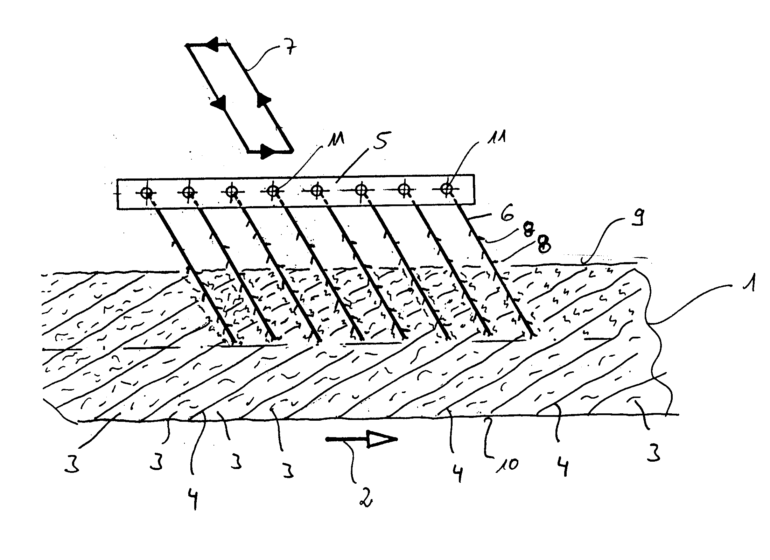

In der Figur ist ein Sekundärvlies 1 auf einer nicht näher dargestellten Transportvorrichtung dargestellt, mit der das Sekundärvlies in Richtung eines Pfeils 2 bewegt wird. Das Sekundärvlies 1 besteht aus einer Vielzahl von Faserlagen 3, die durch das Aufpendeln eines Primärvlieses unter einem bestimmten Winkel nebeneinander angeordnet sind. Zwischen benachbarten Faserlagen 3 sind Grenzflächen angeordnet.

In den Faserlagen 3 sind Mineralfasern angeordnet, die eine Hauptfaserrichtung parallel zu den Grenzflächen 4 aufweisen. Die Mineralfasern sind durch Bindemittel miteinander verbunden.

Oberhalb des Sekundärvlieses 1 ist eine Vorrichtung bestehend aus einem Nadelbalken 5 und mehreren daran gelenkig und feststellbar angeschlossenen Nadeln 6 dargestellt. Der Nadelbalken 5 wird entsprechend eines Bewegungsdiagramms 7 zyklisch bewegt, wobei der Nadelbalken 5 bei in das Sekundärvlies 1 eingedrungenden Nadeln 6 in Richtung des Pfeils 2 mit einer Geschwindigkeit bewegt wird, die mit der Fördergeschwindigkeit des Sekundärvlieses 1 übereinstimmt.

Jede Nadel 6 weist an ihrer Außenmantelfläche eine Vielzahl von Widerhaken 8 auf, mit denen beim Herausziehen der Nadeln 6 aus dem Sekundärvlies 1 die Mineralfasern in den Faserlagen 3, insbesondere im Bereich der Grenzflächen 4 in der Art umgelenkt werden, so daß sie benachbarte Faserlagen 3 miteinander verbinden. Bestimmte Mineralfasern werden somit Bestandteil benachbarter Faserlagen 3, so daß hierdurch eine mechanische Verbindung benachbarter Faserlagen erzielt wird, die die gegebenenfalls unzureichende Verbindung der Faserlagen 3 durch Bindemittel unterstützt.

In der Figur ist eine Vernadelung des Sekundärvlieses 1 bis in den Bereich der Mittelachse dargestellt. Diese einseitige Vernadelung wird dann durchgeführt, wenn das Sekundärvlies 1 bei seiner Lagerung oder Nutzung im Bereich seiner Oberfläche 9 stärker auf Zug oder Scherung beansprucht wird, als auf einer gegenüberliegenden Oberfläche 10.

Um bei der Vernadelung des Sekundärvlieses 1 eine unerwünschte hohe Verdichtung im Bereich der Primärvlieslagen zu vermeiden, werden die Stiftdichten, die Anzahl, der Winkel und die Länge der Widerhaken 8 sowie die Eindringtiefe der Nadeln 6 variiert. Die Nadeln 6 weisen Durchmesser von bis zum 10 mm, vorzugsweise 5 mm auf. Es können aber auch Hohlstifte verwendet werden, deren Durchmesser bis ca. 15 mm, vorzugsweise aber < 10 mm ist. Die Nadeln 6 bzw. die Hohlstifte bestehen aus Normalstahl, legierten Stählen oder Kunststoffen, insbesondere mit Fasern verstärkten Kunststoffen. Üblicherweise sind die Nadeln 6 in einem gleichmäßigen Raster angeordnet. Es besteht aber auch die Möglichkeit, die Nadeln 6 nur in einer Linie anzuordnen, wobei sich die Linie über die gesamte Breite des Sekundärvlieses 1 erstreckt.

Die Nadeln 6 sind über Gelenke 11 am Nadelbalken 5 angeordnet. Über die Gelenke 11 kann der Winkel der Nadeln 6 relativ zur Oberfläche 9 des Sekundärvlieses 1 derart eingestellt werden, daß die Nadeln 6 im wesentlichen unter einem rechten Winkel auf die Grenzflächen 4 zwischen benachbarten Faserlagen 3 auftreffen. Die Einstellung der Nadeln 6 in den Gelenken 11 ist somit in Abhängigkeit der aufgependelten Primärvlieslagen im Sekundärvlies 1 einzustellen.

Die Nadeln 6 können abweichend von der Darstellung in der einzigen Figur unterschiedlich lang ausgebildet sein. Um eine Vernadelung in unterschiedlichen Tiefenbereichen des Sekundärvlieses 1 durchzuführen, können die Widerhaken 8 gleichmäßig über die Länge der Nadeln 6 oder nur in bestimmten Bereichen der Mantelflächen der Nadeln 6 vorgesehen sein. Hierbei sind die Widerhaken 8 über den Umfang der Nadeln 6 verteilt angeordnet.

Je nach Materialstärke des Sekundärvlieses 1 kann es notwendig sein, eine Vernadelung des Sekundärvlieses 1 von beiden Oberflächen 9, 10 aus vorzunehmen.

## Patentansprüche

1. Verfahren zur Herstellung von Dämmstoffen aus Mineralfasern, insbesondere aus Steinwollefasern, bei dem mit Bindemitteln versetzte Fasern zu einem Faservlies abgelegt werden, welches Faservlies ein Primärvlies mit großen Oberflächen bildet, das derart zu einem Sekundärvlies angeordnet wird, daß die großen Oberflächen des Primärvlieses im Sekundärvlies aneinanderliegend als Grenzfläche benachbarter Faserlagen angeordnet sind,
**dadurch gekennzeichnet**,
daß die Mineralfasern im Bereich der Grenzflächen durch eine mechanische Bearbeitung des Sekundärvlieses über große Oberflächen des Sekundärvlieses aus ihrer ursprünglichen Anordnung im Primärvlies derart umgelenkt werden, daß einzelne Mineralfasern mit zumindest Teilbereichen in benachbarten Faserlagen angeordnet sind.

2. Verfahren nach Anspruch 1,
**dadurch gekennzeichnet**,
daß die Umlenkung der Mineralfasern vor und / oder während einer Kompression des Sekundärvlieses in Längs- und / oder Dickenrichtung des Sekundärvlieses erfolgt.

3. Verfahren nach Anspruch 1,
**dadurch gekennzeichnet**,
daß die umzulenkenden Mineralfasern in einem Winkel von 45° bis 135° zur Grenzfläche umgelenkt werden.

4. Verfahren nach Anspruch 1,
**dadurch gekennzeichnet**,
daß die Umlenkung in mehreren, vorzugsweise gleichen Stufen erfolgt.

5. Verfahren nach Anspruch 1,
**dadurch gekennzeichnet**,
daß die Umlenkung der Mineralfasern durch eine Vernadelung erfolgt.

6. Verfahren nach Anspruch 1,
**dadurch gekennzeichnet**,
daß das Primärvlies, insbesondere in seinen in einem Winkel außenliegenden Bereichen, vor Erreichen einer Pendelstation zur Bildung des Sekundärvlieses mit einer Bindemittellösung besprüht wird.

7. Verfahren nach Anspruch 6,
**dadurch gekennzeichnet**,
daß als Bindemittellösung Thermoplaste, insbesondere Gemische aus duroplastischen Bindemitteln und Dispersionen thermoplastischer Kunststoffe, wie Polyvinylacetat, Acrylate, Polystyrol, Styrol, Butadien allein, mit Copolymerisaten oder in Gemischen aufgesprüht werden.

8. Verfahren nach Anspruch 6,
**dadurch gekennzeichnet**,
daß die Bindemittellösung in einem Umfang von < 600 g Trockensubstanz/m² doppelter Primärvlies-Grenzfläche aufgesprüht wird.

9. Verfahren nach Anspruch 6,
**dadurch gekennzeichnet**,
daß als Bindemittellösung anorganische Bindemittel, wie Wasserglas, Kieselsol und / oder über Sol-Gel-Reaktionen organische Kieselsäureverbindungen, insbesondere mit zusätzlich flammschützenden Oxiden, Hydraten mit hoher Dispersion aufgesprüht werden.

10. Verfahren nach Anspruch 6,
**dadurch gekennzeichnet**,
daß das Aufsprühen der Bindemittellösung auf einer großen Oberfläche des Primärvlieses gleichzeitig mit einer Unterdruckerzeugung im gleichen Flächenbereich der gegenüberliegenden großen Oberfläche erfolgt.

11. Verfahren nach Anspruch 6,
**dadurch gekennzeichnet**,
daß den wäßrigen Bindemittellösungen organische Lösungsmittel, insbesondere Tenside und / oder Alkohol in geringen, die Brand- oder gar Explosionsgefahr nicht hervorrufenden Mengen zugesetzt werden.

12. Verfahren nach Anspruch 1,
**dadurch gekennzeichnet**,
daß die Umlenkung der Mineralfasern im Sekundärvlies ungefähr in einer Tiefe von zumindest 1 bis 2 cm bis zur halben Materialstärke des Sekundärvlieses erfolgt.

13. Verfahren nach Anspruch 5,
**dadurch gekennzeichnet**,
daß die Vernadelung mit einer Nadeldichte von 2 bis 5 Stück/cm², insbesondere 4 Stück/cm² durchgeführt wird.

14. Verfahren nach Anspruch 1,
**dadurch gekennzeichnet**,
daß die Umlenkung der Mineralfasern von beiden großen Oberflächen des Sekundärvlieses aus erfolgt.

15. Verfahren nach Anspruch 5,
**dadurch gekennzeichnet**,
daß während der Vernadelung über eindringende Nadeln Bindemittel in das Sekundärvlies eingebracht werden.

16. Verfahren nach Anspruch 15,
**dadurch gekennzeichnet**,
daß als Bindemittel wäßrige Harzlösungen, kolloidale Lösungen, Dispersionen thermoplastischer Bindemittel, in organischen Lösungsmitteln gelöste Harze, sowie anorganische Bindemittel wie Kieselsol, Wasserglas, organische Kieselsäureverbindungen, die in Sol-Gel-Prozessen aushärten allein oder in Gemischen eingebracht werden.

17. Verfahren nach Anspruch 15,
**dadurch gekennzeichnet**,
daß dem Bindemittel Fasern aus Polyamiden und / oder Polyamiden und / oder anorganischen Füllstoffen, insbesondere in den Nanometer-Bereich dispergierte H-Betonite in Verbindung mit Phenol-Harnstoff-Formaldehyd-Harz-Gemischen zugesetzt werden, die insbesondere über beheizbare Düsen in das Sekundärvlies eingebracht werden.

18. Verfahren nach Anspruch 15,
**dadurch gekennzeichnet**,
daß in die gegenüberliegend angeordneten großen Oberflächen des Sekundärvlieses Bindemittel unterschiedlicher Zusammensetzung und Wirkung eingebracht werden.

19. Verfahren nach Anspruch 15,
**dadurch gekennzeichnet**,
daß die Bindemittel über einen bestimmten Flächen- und / oder Tiefenbereich des Sekundärvlieses gleichmäßig oder punktuell verteilt eingebracht werden.

20. Verfahren nach einem der Ansprüche 2 bis 19,
**dadurch gekennzeichnet**,
daß die Kompression des Sekundärvlieses in Längs- und Dickenrichtung des Sekundärvlieses in einzelnen, insbesondere gegeneinander abgegrenzten Schritten erfolgt und daß das Eindringen des Bindemittels in das Sekundärvlies zwischen den Kompressionsschritten erfolgt.

21. Verfahren nach Anspruch 1,
**dadurch gekennzeichnet**,
daß das Primär- oder Sekundärvlies insbesondere vor der Kompression mit Sattdampf beaufschlagt wird, wobei der Sattdampf insbesondere auch in das Vlies über Hohlstifte eingebracht wird.

22. Verfahren nach Anspruch 21,
**dadurch gekennzeichnet**,
daß über die Hohlstifte mit Sensoren Temperatur und Feuchtegehalt im Sekundärvlies erfaßt werden.

23. Verfahren nach Anspruch 1,
**dadurch gekennzeichnet**,
daß zumindest eine große Oberfläche des Primärvlieses durch Stachelwalzen aufgerauht wird, ohne daß ein Aufreißen der Oberflächen erfolgt.

24. Vorrichtung zur Bearbeitung eines Dämmstoffvlieses aus mit Bindemitteln verbundenen Mineralfasern, insbesondere aus Steinwollefasern, mit einer Fördereinrichtung, auf der das Dämmstoffvlies mit bestimmter Transportgeschwindigkeit gefördert wird und einem Nadelbalken, der eine Vielzahl von Nadeln aufweist, der heb- und senkbar oberhalb einer großen Oberfläche des Dämmstoffvlieses angeordnet ist,
**dadurch gekennzeichnet**,
daß die Nadeln (6) beim Eindringen in das Dämmstoffvlies (1) unter einem Winkel zwischen 45° und 135° relativ zu Grenzflächen (4) benachbart angeordneter Faserlagen (3) eines aufgependelten Primärvlieses ausgerichtet sind.

25. Vorrichtung nach Anspruch 24,
**dadurch gekennzeichnet**,
daß der Nadelbalken (5) derart angetrieben ist, daß die in das Dämmstoffvlies (1) eingedrungenen Nadeln (6) mit Transportgeschwindigkeit bewegbar sind.

26. Vorrichtung nach Anspruch 24,
**dadurch gekennzeichnet**,
daß die Nadeln (6) hohl mit zumindest einer unteren Auslaßöffnung ausgebildet sind.

27. Vorrichtung nach Anspruch 24,
**dadurch gekennzeichnet**,
daß die Nadeln (6) hinsichtlich ihrer Anordnung und / oder Ausgestaltung austauschbar im Nadelbalken (5) angeordnet sind.

28. Vorrichtung nach Anspruch 24,
**dadurch gekennzeichnet**,
daß jede Nadel (6) im Bereich ihrer Außenmantelfläche eine Vielzahl von Widerhaken (8) aufweist.

29. Vorrichtung nach Anspruch 24,
**dadurch gekennzeichnet**,
daß die Nadeln (6) an ihren freien Enden verbreitert ausgebildet sind.

30. Vorrichtung nach Anspruch 26,
**dadurch gekennzeichnet,**
daß die Nadeln (6) eine untere und / oder mehrere seitliche Auslaßöffnungen aufweisen.

31. Vorrichtung nach Anspruch 26,
**dadurch gekennzeichnet**,
daß die Nadeln (6) beheizt sind.

32. Vorrichtung nach Anspruch 24,.
**dadurch gekennzeichnet**,
daß die Nadeln (6) hinsichtlich ihrer Winkelstellung zum Nadelbalken (5) einstellbar sind.

33. Vorrichtung nach Anspruch 24,
**dadurch gekennzeichnet**,
daß vor dem Nadelbalken (5) zumindest eine Stachelwalze angeordnet ist, deren Stacheln vorzugsweise aus kegelstumpfförmigen Körpern ausgebildet sind, auf deren Flanken Widerhaken aufgesetzt sind.

34. Dämmstoffelement aus Mineralfasern, insbesondere Steinwollefasern mit zwei einander gegenüberliegend angeordneten und parallel verlaufenden großen Oberflächen, wobei die Mineralfasern in einzelnen Faserlagen angeordnet sind, welche Faserlagen in einem Winkel > 0° und < 90° zur großen Oberfläche angeordnet sind und die Mineralfasern in überwiegend einer Hauptfaserrichtung parallel zu den Oberflächen der Faserlagen verlaufen,
**dadurch gekennzeichnet**,
daß die Mineralfasern im Bereich von Grenzflächen (4) zwischen benachbarten Faserlagen (3) einen von der Hauptfaserrichtung abweichenden Verlauf, insbesondere rechtwinklig zur Hauptfaserrichtung ausgerichteten Verlauf aufweisen.

35. Dämmstoffelement nach Anspruch 34,
**dadurch gekennzeichnet**,
daß der von der Hauptfaserrichtung abweichende Verlauf der Mineralfasern im Bereich der Grenzflächen (4) auf einen bestimmten Tiefenbereich ausgehend von einer großen Oberfläche (9) beschränkt ist und maximal die Hälfte der Materialstärke beträgt.

36. Dämmstoffelement nach Anspruch 34,
**dadurch gekennzeichnet**,
daß das Dämmstoffelement aus einem mäandrierend abgelegten Primärvlies gebildet ist, welches als Sekundärvlies (1) komprimiert ist, wobei benachbarte Faserlagen (3) aus den Mäandern des Primärvlieses gebildet sind.
